# EUROPÄISCHE PATENTSCHRIFT

(11) **EP 3 912 274 B1**
(45) Veröffentlichungstag und Bekanntmachung des Hinweises auf die Patenterteilung: **22.06.2022**
(21) Anmeldenummer: 20713569.0
(22) Anmeldetag: 20.03.2020
(51) Int. Cl.: H04B 1/3822, H04B 1/40, H04W 4/40

(54) **ANTENNENVORRICHTUNG ZUM ÜBERTRAGEN VON HOCHFREQUENTEN SIGNALEN AUS ODER IN EIN KRAFTFAHRZEUG UND KRAFTFAHRZEUG MIT EINER ANTENNENVORRICHTUNG**
ANTENNA DEVICE FOR TRANSMITTING HIGH-FREQUENCY SIGNALS FROM OR TO A MOTOR VEHICLE, AND MOTOR VEHICLE COMPRISING AN ANTENNA DEVICE
DISPOSITIF D'ANTENNE POUR LA TRANSMISSION DE SIGNAUX À HAUTE FRÉQUENCE HORS OU DANS UN VÉHICULE AUTOMOBILE ET VÉHICULE AUTOMOBILE COMPRENANT UN DISPOSITIF D'ANTENNE

(30) Priorität: 15.04.2019 DE 102019205406
(43) Veröffentlichungstag der Anmeldung: 24.11.2021
(73) Patentinhaber: AUDI AG, 85045 Ingolstadt (DE)
(72) Erfinder: REICHARDT, Lars, 85139 Wettstetten (DE); VOLNHALS, Stefan, 85111 Adelschlag (DE)
(86) Internationale Anmeldenummer: PCT/EP2020/057734
(87) Internationale Veröffentlichungsnummer: WO 2020/212071

(56) Entgegenhaltungen:
- EP-A2- 1 039 650
- DE-A1-102015 211 413
- DE-A1-102016 214 855

## Beschreibung

Die Erfindung betrifft eine Antennenvorrichtung zum Übertragen von hochfrequenten Signalen aus oder in ein Kraftfahrzeug sowie ein Kraftfahrzeug mit einer solchen Antennenvorrichtung.

In einem Kraftfahrzeug werden Dienste, die hochfrequente Signale nutzen, wie beispielsweise Fahrzeug-zu-Fahrzeug- oder Fahrzeug-zu-Infrastruktur-Dienste, die in einem Bereich von 5 bis 6 Gigahertz übertragen, immer wichtiger. Da die typischerweise verbauten Kabel, insbesondere Koaxialkabel, in diesem Frequenzbereich eine hohe Dämpfung aufweisen und ein Frontend, das heißt ein Funkmodul für einen Dienst im Kraftfahrzeug, mit der dazugehörigen Antenne über mehrere Meter Kabel verbunden wird, ist ein Kompensator an der Antenne in einem Antennenmodul notwendig, um eine ausreichende Performanz der Antennenvorrichtung zu gewährleisten.

Der Kompensator kann dabei zwischen einem Sende- und Empfangsmodus des angeschlossenen Funkmoduls unterscheiden und die hochfrequenten Signale entsprechend verstärken oder abschwächen. Dafür ist ein Steuersignal zum Steuern des Kompensators notwendig, um zwischen einer Einstellung, wie beispielsweise einer Verstärkung oder einer Dämpfung, eines jeweiligen Funkmoduls umzuschalten.

Aus der DE 10 2015 211 413 A1 sind ein Verfahren und eine gattungsgemäße Kompensationsvorrichtung für ein als Fahrzeug-zu-Fahrzeug-Kommunikation zu sendendes Signal bekannt, mit mindestens einem Kanal von einem Fahrzeug-zu-Fahrzeug-Kommunikationstransceiver zu mindestens einer Antenne hin, mit einer ersten Sendeleistungs-Detektionseinrichtung, die mit einem Sendeausgang des Fahrzeug-zu-Fahrzeug-Kommunikations-Transceivers verbunden ist, um eine erste Leistung zu detektieren, mit einer zweiten Sendeleistungs-Detektionseinrichtung, die mit einer Antenne verbunden ist, um eine zweite Leistung zu detektieren, mit einer Steuerungseinrichtung zur Bildung einer Differenz zwischen dem Wert der detektierten ersten Leistung und dem Wert der detektierten zweiten Leistung und zur Bildung eines Steuersignals, und mit einem Verstärker mit durch das Steuersignal einstellbarem Verstärkungsfaktor, der zwischen dem Fahrzeug-zu-Fahrzeug-Kommunikations-Transceiver und einer Antenne angeordnet ist.

Aus der DE 10 2016 214 855 A1 ist ein System für ein Kraftfahrzeug zum Austausch von Informationen mit mindestens einem weiteren Kraftfahrzeug bekannt, wobei das System eine zentrale Recheneinheit mit einem Rechenkern aufweist, der mit mindestens einem Antennenmodul verbunden ist, wobei das mindestens eine Antennenmodul dazu ausgebildet ist, Signale, die Informationen umfassen, mit dem mindestens einen weiteren Kraftfahrzeug auszutauschen, wobei in dem Rechenkern eine Anwendung zum Durchführen einer Kraftfahrzeug-zu-Kraftfahrzeug Kommunikation installiert ist, wobei der Rechenkern dazu ausgebildet ist, das mindestens eine Antennenmodul unter Durchführung einer Signalverarbeitung zu steuern.

Aus der EP 1 039 650 A2 ist eine Schaltungsanordnung zur Dämpfungskompensation der zwischen einer Mobilfunkstation und einer Antenne in einem HF-Kabel auftretenden Signaldämpfung bekannt.

Aus der DE 10 2015 220 297 A1 ist eine Antenneneinrichtung und ein Verfahren zum Betreiben einer solchen bekannt. Die Antenneneinrichtung weist eine Antenne auf, wobei die Antenne über ein Antennenkabel mit einem elektronischen Gerät verbunden ist und über das Antennenkabel hochfrequente Signale zwischen dem elektronischen Gerät und der Antenne und umgekehrt übertragen werden. Die Antenneneinrichtung weist eine Steuereinheit sowie Schalteinheiten auf, die von der Steuereinheit angesteuert werden, wobei mittels der Schalteinheiten zwischen einem Empfangspfad und einem Sendepfad zwischen dem elektronischen Gerät und der Antenne umgeschaltet wird.

Aus der DE 10 2017 202 341 A1 ist ein Kompensator zur Kompensation von Leistungs- beziehungsweise Kopplungsverlusten eines Signalübertragungspfades zur Übertragung eines Kommunikationssignals zwischen einer Antenne und einer elektronischen Kontrolleinheit bekannt.

Die Aufgabe der vorliegenden Erfindung ist es, eine Antennenvorrichtung zum Übertragen von hochfrequenten Signalen für mehrere Funkmodule, das bedeutet mehrere Hochfrequenzdienste, bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Die Erfindung basiert auf der Erkenntnis, dass bei einer Antennenvorrichtung mit mehreren Funkmodulen ein Steuersignal für einen Kompensator zum Dämpfen oder Verstärken eines hochfrequenten Signals eines ersten Funkmoduls auf ein Antennenkabel eines zweiten Funkmoduls moduliert wird, um eine Beeinflussung des hochfrequenten Signals durch das Steuersignal zu minimieren.

Durch die Erfindung ist eine Antennenvorrichtung zum Übertragen von hochfrequenten Signalen, insbesondere Signalen in einem Bereich von 5-6 Gigahertz, aus oder in ein Kraftfahrzeug, zum Beispiel für Fahrzeug-zu-Fahrzeug- oder Fahrzeug-zu-Infrastruktur-Dienste, bereitgestellt. Die Antennenvorrichtung umfasst ein erstes Funkmodul und ein zweites Funkmodul, die dazu ausgelegt sind, hochfrequente Signale zum Übertragen über eine Antenne bereitzustellen. Das erste Funkmodul kann dabei einen Datenübertragungsdienst, wie beispielsweise einen Dienst nach dem 5G-Standard für eine Fahrzeug-zu-Fahrzeug-Kommunikation umfassen und das zweite Funkmodul kann beispielsweise für eine GPS-Kommunikation vorgesehen sein.

Ferner umfasst die Antennenvorrichtung ein Antennenmodul, welches die Antenne zum Übertragen der hochfrequenten Signale und einen Kompensator umfasst, wobei das Antennenmodul über ein erstes Antennenkabel mit dem ersten Funkmodul und über ein zweites Antennenkabel mit dem zweiten Funkmodul verbunden ist, wobei das jeweilige Antennenkabel dazu ausgebildet ist, die hochfrequenten Signale zwischen dem Antennenmodul und dem jeweiligen Funkmodul und umgekehrt weiterzuleiten. Vorzugsweise kann das Antennenkabel, das das jeweilige Funkmodul mit dem Antennenmodul verbindet, ein Koaxialkabel aufweisen, insbesondere ein Koaxialkabel mit einer Länge von größer gleich einen Meter.

Der Kompensator ist dazu ausgebildet, eine Signalstärke der hochfrequenten Signale entsprechend einem Steuersignal zu modifizieren, wobei das erste Funkmodul und das zweite Funkmodul ferner dazu ausgelegt sind, das Steuersignal zum Steuern des Kompensators zu erzeugen, wobei das zweite Funkmodul dazu ausgebildet ist, das Steuersignal für das erste Funkmodul zum Steuern des Kompensators auf das zweite Antennenkabel zu modulieren.

Mit anderen Worten können zumindest zwei Funkmodule für eine Antennenvorrichtung zum Übertragen von hochfrequenten Signalen vorgesehen sein, die die hochfrequenten Signale über ein jeweiliges Antennenkabel zu einem Antennenmodul übertragen können, wobei die hochfrequenten Signale im Antennenmodul von einem Kompensator entsprechend einem Steuersignal modifiziert werden können und das Steuersignal auf das Antennenkabel des jeweiligen anderen Funkmoduls zum Steuern des Kompensators moduliert wird. Die Modulation der Steuersignale zum Steuern des Kompensators können beispielsweise mittels bekannter Modulationsverfahren auf das Antennenkabel des jeweiligen anderen Funkmoduls durchgeführt werden, beispielsweise über eine Amplitudenmodulation, eine Frequenzmodulation, eine Phasenmodulation und/oder eine Pulscodemodulation. Das Antennenmodul und die Antenne können insbesondere eine Multiantennensystemarchitektur aufweisen, die in der Lage ist, unterschiedliche Funkmodule in einer Antenne zu vereinen.

Des Weiteren ist vorgesehen, dass die Antennenvorrichtung ferner eine Signalpfadsteuereinrichtung aufweist, wobei die Signalpfadsteuereinrichtung dazu ausgebildet ist, zu prüfen, welches Funkmodul keine hochfrequenten Signale überträgt, und das Steuersignal des jeweiligen Funkmoduls über das Antennenkabel des Funkmoduls zu übertragen, das keine hochfrequenten Signale überträgt. Mit anderen Worten kann eine Signalpfadsteuereinrichtung überprüfen, welches der Funkmodule gerade keine hochfrequenten Signale überträgt, das bedeutet, welches beispielsweise nicht in Betrieb ist, und dann das Steuersignal über dieses Funkmodul übertragen. Hierdurch ergibt sich der Vorteil, dass eine Beeinträchtigung des Steuersignals mit den hochfrequenten Signalen vermieden werden kann.

Durch die Erfindung ergibt sich der Vorteil, dass die für den Kompensator nötigen Steuersignale je nach Verträglichkeit auf das Antennenkabel eines jeweiligen anderen Funkmoduls aufmoduliert werden können und nicht auf das Funkmodul, das die hochfrequenten Signale erzeugt, wodurch eine Beeinflussung der hochfrequenten Signale durch das Steuersignal vermieden werden kann. Vorzugsweise kann hier insbesondere ein Frequenzunterschied zwischen den hochfrequenten Signalen und dem Steuersignal berücksichtigt werden. Mit anderen Worten liegt der Vorteil in der Trennung beziehungsweise Entkopplung der Steuersignale von dem für die Übertragung verwendeten koaxialen Kabel. Für die Steuerung wird ein anderes koaxiales Kabel eines anderen Funkmoduls verwendet. Dadurch können teure koaxiale Kabel und die damit verbundenen teuren Steckverbindungen gespart werden. Ferner kann durch eine geringere Anzahl an koaxialen Steckverbindungen Zeit in der Produktion eingespart werden.

Zu der Erfindung gehören auch Ausführungsformen, durch die sich zusätzliche Vorteile ergeben.

Vorzugsweise ist vorgesehen, dass das erste Funkmodul dazu ausgebildet ist, das Steuersignal für das zweite Funkmodul auf das erste Antennenkabel zu modulieren. Hierdurch ergibt sich der Vorteil, dass die Funkmodule untereinander die Steuersignale für das jeweils andere Funkmodul erzeugen können.

Das erste Funkmodul und das zweite Funkmodul können insbesondere ein Navigationsdienst, wie ein globales Navigationssatellitensystem (GNSS) umfassen, wie beispielsweise GPS, GLONAS, Galileo oder Beidou, ein Mobilfunkdienst, wie beispielsweise GMS, UMTS oder LTE, einen Rundfunkdienst, wie zum Beispiel AM-FM, DAB und/oder einen Datenübertragungsdienst, wie zum Beispiel WLAN, BTLE, Car-to-Car oder Car-to-X.

Eine Ausführungsform sieht vor, dass das Modifizieren der Signalstärke der hochfrequenten Signale ein Verstärken und/oder ein Dämpfen der Signalhöhe umfasst. Durch diese Ausführungsform ergibt sich der Vorteil, dass durch den Kompensator das hochfrequente Signal für ein Übertragen über das Antennenkabel verstärkt werden kann und/oder bei einer zu hohen Signalstärke die Signalhöhe gedämpft werden kann.

Eine weitere Ausführungsform sieht vor, dass das Antennenmodul ferner eine Schalteinheit aufweist, die dazu ausgebildet ist, entsprechend dem Steuersignal zwischen einem Sendepfad und einem Empfangspfad der hochfrequenten Signale für das jeweilige Funkmodul umzuschalten. Die Schalteinheit kann beispielsweise in Abhängigkeit des Steuersignals einen Schalter ansteuern, der die hochfrequenten Signale entweder auf einem Empfangspfad oder auf einem Sendepfad umschalten kann. Durch diese Ausführungsform ergibt sich der Vorteil, dass ein Senden und einem Empfangen für ein Funkmodul über das gleiche Antennenkabel durchgeführt werden kann.

Eine weitere Ausführungsform sieht vor, dass ferner zumindest ein drittes Funkmodul mit einem dritten Antennenkabel vorgesehen ist, das beispielsweise auch hochfrequente Signale und ein Steuersignal erzeugen kann, wobei das erste und zweite Funkmodul dazu ausgebildet sind, das Steuersignal für das dritte Funkmodul auf das erste und/oder zweite Antennenkabel zu modulieren. Mit anderen Worten können mehr als zwei Funkmodule vorgesehen sein, das heißt beispielsweise zusätzlich ein drittes Funkmodul, wobei das Steuersignal des dritten Funkmoduls von dem ersten und/oder zweiten Funkmodul auf das jeweilige Antennenkabel moduliert werden kann. Welches der Funkmodule das Steuersignal des dritten Funkmoduls moduliert kann beispielsweise vorher festgelegt sein, es kann jedoch auch dynamisch für jedes Steuersignal entschieden werden, welches Funkmodul das Steuersignal erzeugt. Durch diese Ausführungsform ergibt sich der Vorteil, dass mehrere Funkmodule in der Antennenvorrichtung vorgesehen sein können.

Eine weitere Ausführungsform sieht vor, dass das zweite Funkmodul ferner dazu ausgebildet ist, die Steuersignale des ersten und dritten Funkmoduls zu bündeln und auf das zweite Antennenkabel zu modulieren. Mit Bündeln ist gemeint, dass das zweite Funkmodul eine Anfrage zum Senden der Steuersignale des ersten und des dritten Funkmoduls erhalten kann und dann diese Steuersignale in einem Multiplexverfahren auf das zweite Antennenkabel modulieren kann. Hierbei können bekannte Multiplexverfahren angewendet werden, wie beispielsweise ein Raummultiplexverfahren, Frequenz- beziehungsweise Wellenlängenmultiplexverfahren, ein Zeitmultiplexverfahren oder ein Codemultiplexverfahren. Durch diese Ausführungsform ergibt sich der Vorteil, dass die Steuersignale gleichzeitig über ein Antennenkabel verschickt werden können, wodurch ein Versenden von Steuersignalen auf mehreren Antennenkabeln reduziert werden kann.

Eine weitere Ausführungsform sieht vor, dass die Signalpfadsteuereinrichtung dazu ausgelegt ist, zu prüfen, welches Funkmodul auf einen Sendepfad geschaltet ist, und das Steuersignal über das Antennenkabel des Funkmoduls zu übertragen, das auf den Sendepfad geschaltet ist. Mit anderen Worten wird das Steuersignal über das Antennenkabel beziehungsweise das Funkmodul übertragen, das bereits in einer Sendeeinstellung ist, das heißt auf den Sendepfad geschaltet ist, also in eine Richtung von dem Funkmodul zu dem Antennenmodul. Durch diese Ausführungsform ergibt sich der Vorteil, dass für das Senden des Steuersignals eine Beeinträchtigung durch empfangene hochfrequente Signale vermieden werden kann.

Erfindungsgemäß ist auch ein Kraftfahrzeug mit einer Antennenvorrichtung nach einer der vorhergehenden Ausführungsformen bereitgestellt. Hierbei ergeben sich gleiche Vorteile und Variationsmöglichkeiten wie bei der Antennenvorrichtung. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

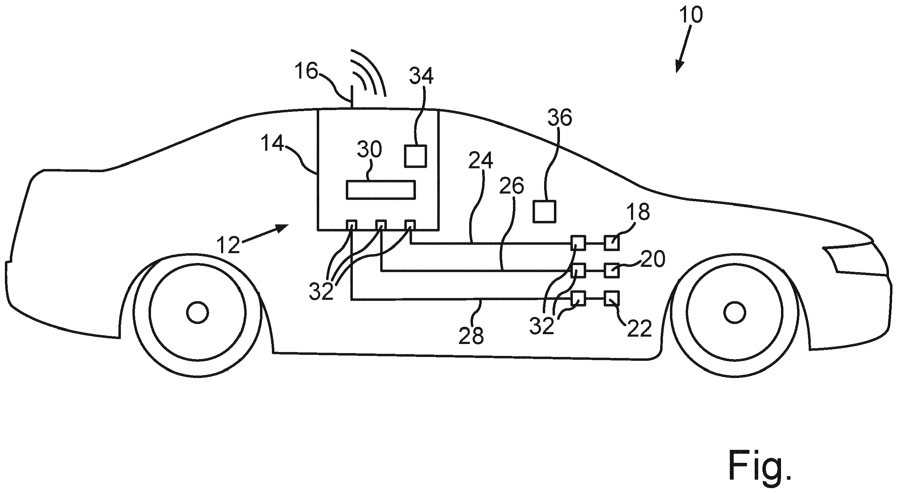

Im Folgenden sind Ausführungsbeispiele der Erfindung beschrieben. Hierzu zeigt die einzige Figur
- Fig.: eine schematische Darstellung eines Kraftfahrzeugs nach einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

Die einzige Figur zeigt eine schematische Darstellung eines Kraftfahrzeugs 10 mit einer Antennenvorrichtung 12 gemäß einer beispielhaften Ausführungsform. In diesem Ausführungsbeispiel kann das Kraftfahrzeug 10 ein Personenkraftwagen sein. Die Antennenvorrichtung 12 kann ein Antennenmodul 14 aufweisen, das eine Antenne 16 umfassen kann, die beispielsweise eine Dachantenne des Kraftfahrzeugs sein kann. Die Antenne 16 kann jedoch auch eine Frontantenne des Kraftfahrzeugs sein. Vorzugsweise kann die Antenne 16 dazu ausgebildet sein, hochfrequente Signale mehrerer Hochfrequenzdienste zu übertragen.

Jeder der Hochfrequenzdienste kann beispielsweise ein eigenes Funkmodul aufweisen, insbesondere können ein erstes Funkmodul 18, ein zweites Funkmodul 20 und ein drittes Funkmodul 22 vorgesehen sein. Das erste Funkmodul 18 kann beispielsweise einen Datenübertragungsdienst wie WLAN umfassen, das zweite Funkmodul einen Navigationsdienst wie GPS und das dritte Funkmodul einen Mobilfunkdienst wie LTE. Alternativ oder zusätzlich können jedoch auch alternative oder weitere Dienste vorgesehen sein. Insbesondere kann das erste bis dritte Funkmodul 18, 20, 22 ausgelegt sein, hochfrequente Signale zum Übertragen über die Antenne 16 bereitzustellen. In diesem Ausführungsbeispiel können die Funkmodule 18, 20, 22 beispielsweise in einem Fahrzeugrechner eines Infotainmentsystems verortet sein.

Zum Übertragen der hochfrequenten Signale kann das erste Funkmodul 18 ein erstes Antennenkabel 24 aufweisen, das zweite Funkmodul 20 ein zweites Antennenkabel 26 und das dritte Funkmodul 22 ein drittes Antennenkabel 28. Die jeweiligen Antennenkabel 24, 26, 28 können vorzugsweise Koaxialkabel sein, die die hochfrequenten Signale über eine Wegstrecke von beispielsweise über einen Meter Entfernung übertragen können. Hierbei kann jedoch insbesondere für hochfrequente Signale in einem Frequenzbereich von 5 bis 6 Gigahertz eine Dämpfung innerhalb der Antennenkabel 24, 26, 28 auftreten, die in dem Antennenmodul 14 von einem Kompensator 30 kompensiert werden können, das heißt dass eine Signalstärke der hochfrequenten Signale modifiziert werden kann. Insbesondere kann das Modifizieren der Signalstärke der hochfrequenten Signale ein Verstärken und/oder ein Dämpfen der Signalhöhe umfassen.

Damit der Kompensator 30 die hochfrequenten Signale der Funkmodule 18, 20, 22 entsprechend modifizieren kann, kann der Kompensator 30 ein Steuersignal empfangen, das von einem der Funkmodule 18, 20, 22 erzeugt werden kann. Hierbei kann insbesondere vorgesehen sein, dass bei einem Übertragen der hochfrequenten Signale von dem ersten Funkmodul 18 über das erste Antennenkabel 24, das erste Funkmodul 18 das zweite Funkmodul 20 ansteuert, sodass das zweite Funkmodul 20 das Steuersignal zum Steuern des Kompensators für das erste Funkmodul 18 generiert und auf das zweite Antennenkabel 26 moduliert. Das hat den Vorteil, dass eventuelle Beeinträchtigungen des hochfrequenten Signals des ersten Funkmoduls reduziert werden können. Insbesondere kann eine Sendetabelle vorgesehen sein, in der festgelegt ist, welches Funkmodul das jeweilige Steuersignal für ein anderes Funkmodul erzeugt.

Das Modulieren des Steuersignal auf das jeweilige Antennenkabel kann beispielsweise mittels bekannter Modulationsverfahren durchgeführt werden, insbesondere kann jedes Funkmodul ein Paar von Diplexern 32 aufweisen, die das Steuersignal auf das Antennenkabel zusammen mit den hochfrequenten Signalen modulieren, beziehungsweise trennen können. Das Antennenmodul 14 kann ferner eine Schalteinheit 34 aufweisen, die entsprechend dem Steuersignal zwischen einem Sendepfad und einem Empfangspfad der hochfrequenten Signale für das jeweilige Funkmodul umschalten kann. Insbesondere kann die Schalteinheit 34 zusammen mit dem Kompensator 30 die Signalstärke der hochfrequenten Signale entsprechend einem Empfangen verstärken, beziehungsweise vor einem Senden dämpfen.

Alternativ oder zusätzlich zu der Sendetabelle kann eine Signalpfadsteuereinrichtung 36 vorgesehen sein, die prüfen kann, welches Funkmodul keine hochfrequenten Signale überträgt und dann das Steuersignal über dasjenige Funkmodul übertragen kann, welches gerade keine hochfrequenten Signale überträgt, wodurch eine Beeinträchtigung der hochfrequenten Signale mit dem Steuersignal reduziert werden kann.

In einer beispielhaften Situation können zum Beispiel das erste Funkmodul 18 und das dritte Funkmodul 22 ein hochfrequentes Signal übertragen. Eine Prüfung durch die Signalpfadsteuereinrichtung 36 kann dann ergeben, dass das zweite Funkmodul 20 aktuell kein hochfrequentes Signal überträgt, woraufhin das zweite Funkmodul 20 das Steuersignal erzeugen kann und über das zweite Antennenkabel 26 zu dem Kompensator 30 und/oder der Schalteinheit 34 überträgt. Vorzugsweise kann in diesem Beispiel das zweite Funkmodul 20 auch die Steuersignale für das erste und dritte Funkmodul 18, 22 mittels eines Multiplexverfahrens bündeln, bevor diese auf das zweite Antennenkabel moduliert werden. Somit können Steuersignale für mehrere Funkmodule auf nur ein Antennenkabel zum Ansteuern des Kompensators 30 moduliert werden.

Zusätzlich kann die Signalpfadsteuereinrichtung 36 überprüfen, welches Funkmodul bereits in einer Sendeeinstellung, das heißt welches Funkmodul auf einen Sendepfad geschaltet ist, und dann bevorzugt das Steuersignal über das Antennenkabel des Funkmoduls zu übertragen, welches sich in der Sendeeinstellung befindet. Beispielsweise kann hier wieder das erste Funkmodul 18 ein hochfrequentes Signal senden beziehungsweise empfangen, wofür ein Steuersignal für den Kompensator 30 erzeugt werden soll. Die Signalpfadsteuereinrichtung 36 kann daraufhin prüfen, ob sich das zweite Funkmodul 20 oder das dritte Funkmodul 22 bereits in einer Sendeeinstellung befindet. In dieser beispielhaft dargestellten Situation kann es sein, dass das zweite Funkmodul 20 gerade erst hochfrequente Signale gesendet hat und das dritte Funkmodul 22 gerade hochfrequente Signale empfangen hat. Daher befindet sich das zweite Funkmodul 20 in einer Sendeeinstellung, das heißt, es ist bereits in Senderichtung geschaltet, wodurch die Signalpfadsteuereinrichtung 36 das zweite Funkmodul 20 antriggern kann, dass es das Steuersignal für das erste Funkmodul 18 erzeugt.

Insgesamt zeigen die Beispiele, wie durch die Erfindung eine Steuerung eines Kompensators über ein Hochfrequenzantennenkabel eines beliebigen Dienstes (Funkmoduls) in einem Antennenmodul bereitgestellt werden kann.

## Patentansprüche

1. Antennenvorrichtung (12) zum Übertragen von hochfrequenten Signalen aus oder in ein Kraftfahrzeug (10), umfassend
- ein erstes Funkmodul (18), das dazu ausgelegt ist, hochfrequente Signale zum Übertragen über eine Antenne (16) bereitzustellen;
- ein Antennenmodul (14) umfassend die Antenne (16) zum Übertragen der hochfrequenten Signale und einen Kompensator (30); wobei
- das Antennenmodul (14) über ein erstes Antennenkabel (24) mit dem ersten Funkmodul (18) verbunden ist, wobei das erste Antennenkabel (24) dazu ausgebildet ist, die hochfrequenten Signale zwischen dem Antennenmodul (14) und dem ersten Funkmodul (18) und umgekehrt weiterzuleiten; wobei
- der Kompensator (30) dazu ausgebildet ist, eine Signalstärke der hochfrequenten Signale entsprechend einem Steuersignal zu modifizieren;
- ein zweites Funkmodul (20), das dazu ausgelegt ist, hochfrequente Signale zum Übertragen über die Antenne (16) bereitzustellen; **gekennzeichnet dadurch, dass** das Antennenmodul (14) über ein zweites Antennenkabel (26) mit dem zweiten Funkmodul (20) verbunden ist, wobei das zweite Antennenkabel (26) dazu ausgebildet ist, die hochfrequenten Signale zwischen dem Antennenmodul (14) und dem zweiten Funkmodul (20) und umgekehrt weiterzuleiten; wobei
- das erste Funkmodul (18) und das zweite Funkmodul (20) ferner dazu ausgelegt sind, das Steuersignal zum Steuern des Kompensators zu erzeugen, wobei das zweite Funkmodul (20) dazu ausgebildet ist, das Steuersignal für das erste Funkmodul (18) zum Steuern des Kompensators auf das zweite Antennenkabel (26) zu modulieren;
- wobei die Antennenvorrichtung (12) ferner eine Signalpfadsteuereinrichtung (36) aufweist, wobei die Signalpfadsteuereinrichtung (36) dazu ausgebildet ist, zu prüfen, welches Funkmodul keine hochfrequenten Signale überträgt, und das Steuersignal des jeweiligen Funkmoduls über das Antennenkabel des Funkmoduls zu übertragen, das keine hochfrequenten Signale überträgt.

2. Antennenvorrichtung (12) nach Anspruch 1, wobei das erste Funkmodul (18) dazu ausgebildet ist, das Steuersignal für das zweite Funkmodul (20) auf das erste Antennenkabel (24) zu modulieren.

3. Antennenvorrichtung (12) nach einem der vorhergehenden Ansprüche, wobei das erste Funkmodul (18) und das zweite Funkmodul (20) einen Navigationsdienst, einen Mobilfunkdienst, einen Rundfunkdienst und/oder einen Datenübertragungsdienst umfasst.

4. Antennenvorrichtung (12) nach einem der vorhergehenden Ansprüche, wobei das Modifizieren der Signalstärke der hochfrequenten Signale ein Verstärken und/oder ein Dämpfen der Signalhöhe umfasst.

5. Antennenvorrichtung (12) nach einem der vorhergehenden Ansprüche, wobei das Antennenmodul (14) ferner eine Schalteinheit (34) aufweist, die dazu ausgebildet ist, entsprechend dem Steuersignal zwischen einem Sendepfad und einem Empfangspfad der hochfrequenten Signale für das jeweilige Funkmodul umzuschalten.

6. Antennenvorrichtung (12) nach einem der vorhergehenden Ansprüche, wobei ferner zumindest ein drittes Funkmodul (22) mit einem dritten Antennenkabel (28) vorgesehen ist, wobei das erste und zweite Funkmodul (18, 20) dazu ausgebildet sind, das Steuersignal für das dritte Funkmodul (22) auf das erste und/oder zweite Antennenkabel (24, 26) zu modulieren.

7. Antennenvorrichtung (12) nach Anspruch 6, wobei das zweite Funkmodul (20) ferner dazu ausgebildet ist, die Steuersignale des ersten und dritten Funkmoduls zu bündeln und auf das zweite Antennenkabel (26) zu modulieren.

8. Antennenvorrichtung (12) nach Anspruch 5, wobei die Signalpfadsteuereinrichtung (36) dazu ausgelegt ist, zu prüfen, welches Funkmodul auf einen Sendepfad geschaltet ist, und das Steuersignal über das Antennenkabel des Funkmoduls zu übertragen, das auf den Sendepfad geschaltet ist.

9. Kraftfahrzeug (10) mit einer Antennenvorrichtung (12) nach einem der vorhergehenden Ansprüche.

## Claims

1. Antenna device (12) for transmitting high-frequency signals from or to a motor vehicle (10), comprising
- a first radio module (18) which is configured to provide high-frequency signals for transmission via an antenna (16);
- an antenna module (14) comprising the antenna (16) for transmitting the high-frequency signals and a compensator (30); wherein
- the antenna module (14) is connected via a first antenna cable (24) to the first radio module (18), wherein the first antenna cable (24) is configured to convey the high-frequency signals between the antenna module (14) and the first radio module (18) and vice versa; wherein
- the compensator (30) is configured to modify a signal strength of the high-frequency signals according to a control signal;
- a second radio module (20) which is configured to provide high-frequency signals for transmission via the antenna (16);
**characterised in that** the antenna module (14) is connected via a second antenna cable (26) to the second radio module (20), wherein the second antenna cable (26) is configured to convey the high-frequency signals between the antenna module (14) and the second radio module (20) and vice versa; wherein
- the first radio module (18) and the second radio module (20) are further configured to generate the control signal for controlling the compensator, wherein the second radio module (20) is configured to modulate the control signal for the first radio module (18) for controlling the compensator to the second antenna cable (26);
- wherein the antenna device (12) further has a signal path control device (36), wherein the signal path control device (36) is configured to check which radio module does not transmit high-frequency signals, and to transmit the control signal of the respective radio module via the antenna cable of the radio module which does not transmit high-frequency signals.

2. Antenna device (12) according to claim 1, wherein the first radio module (18) is configured to modulate the control signal for the second radio module (20) to the first antenna cable (24).

3. Antenna device (12) according to any of the preceding claims, wherein the first radio module (18) and the second radio module (20) comprise a navigation service, a mobile phone service, a broadcasting service and/or a data transmission service.

4. Antenna device (12) according to any of the preceding claims, wherein the modification of the signal strength of the high-frequency signals comprises amplifying and/or attenuating the signal level.

5. Antenna device (12) according to any of the preceding claims, wherein the antenna module (14) further has a switching unit (34) which, depending on the control signal, is configured to switch between a transmission path and a receiving path of the high-frequency signals for the respective radio module.

6. Antenna device (12) according to any of the preceding claims, wherein at least one third radio module (22) is further provided with a third antenna cable (28), wherein the first and second radio module (18, 20) are configured to modulate the control signal for the third radio module (22) to the first and/or second antenna cable (24, 26).

7. Antenna device (12) according to claim 6, wherein the second radio module (20) is further configured to bundle the control signals of the first and third radio module and modulate them to the second antenna cable (26).

8. Antenna device (12) according to claim 5, wherein the signal path control device (36) is configured to check which radio module is switched to a transmission path and to transmit the control signal via the antenna cable of the radio module which is switched to the transmission path.

9. Motor vehicle (10) with an antenna device (12) according to any of the preceding claims.

## Revendications

1. Dispositif d'antenne (12) pour la transmission de signaux haute fréquence depuis ou dans un véhicule à moteur (10), comprenant
- un premier module radio (18) qui est conçu pour fournir des signaux haute fréquence pour la transmission par l'intermédiaire d'une antenne (16) ;
- un module d'antenne (14) comprenant l'antenne (16) pour la transmission des signaux haute fréquence et un compensateur (30) ; dans lequel
- le module d'antenne (14) est relié au premier module radio (18) par l'intermédiaire d'un premier câble d'antenne (24), dans lequel le premier câble d'antenne (24) est réalisé pour retransmettre les signaux haute fréquence entre le module d'antenne (14) et le premier module radio (18) et inversement ; dans lequel
- le compensateur (30) est réalisé pour modifier une intensité de signal des signaux haute fréquence en fonction d'un signal de commande ;
- un deuxième module radio (20) qui est conçu pour fournir des signaux haute fréquence pour la transmission par l'intermédiaire de l'antenne (16) ;
**caractérisé en ce que** le module d'antenne (14) est relié au deuxième module radio (20) par l'intermédiaire d'un deuxième câble d'antenne (26), dans lequel le deuxième câble d'antenne (26) est réalisé pour retransmettre les signaux haute fréquence entre le module d'antenne (14) et le deuxième module radio (20) et inversement ; dans lequel
- le premier module d'antenne (18) et le deuxième module d'antenne (20) sont en outre conçus pour générer le signal de commande pour la commande du compensateur, dans lequel le deuxième module radio (20) est réalisé pour moduler le signal de commande pour le premier module radio (18) pour la commande du compensateur sur le deuxième câble d'antenne (26) ;
- dans lequel le dispositif d'antenne (12) présente en outre un dispositif de commande de trajet de signaux (36), dans lequel le dispositif de commande de trajet de signaux (36) est réalisé pour vérifier quel module radio ne transmet pas de signaux haute fréquence, et transmettre le signal de commande du module radio respectif par l'intermédiaire du câble d'antenne du module radio qui ne transmet pas de signaux haute fréquence.

2. Dispositif d'antenne (12) selon la revendication 1, dans lequel le premier module radio (18) est réalisé pour moduler le signal de commande pour le deuxième module radio (20) sur le premier câble d'antenne (24).

3. Dispositif d'antenne (12) selon l'une quelconque des revendications précédentes, dans lequel le premier module radio (18) et le deuxième module radio (20) comprennent un service de navigation, un service radio mobile, un service de radiodiffusion et/ou un service de transmission de données.

4. Dispositif d'antenne (12) selon l'une quelconque des revendications précédentes, dans lequel la modification des intensités de signaux des signaux haute fréquence comprend un renforcement et/ou une atténuation du niveau de signal.

5. Dispositif d'antenne (12) selon l'une quelconque des revendications précédentes, dans lequel le module d'antenne (14) présente en outre une unité de commutation (34) qui est réalisée pour commuter en fonction du signal de commande entre un trajet d'émission et un trajet de réception des signaux haute fréquence pour le module radio respectif.

6. Dispositif d'antenne (12) selon l'une quelconque des revendications précédentes, dans lequel en outre au moins un troisième module radio (22) avec un troisième câble d'antenne (28) est prévu, dans lequel le premier et le deuxième module radio (18, 20) sont réalisés pour moduler le signal de commande pour le troisième module radio (22) sur le premier et/ou le deuxième câble d'antenne (24, 26).

7. Dispositif d'antenne (12) selon la revendication 6, dans lequel le deuxième module radio (20) est en outre réalisé pour concentrer les signaux de commande du premier et du troisième module radio et les moduler sur le deuxième câble d'antenne (26).

8. Dispositif d'antenne (12) selon la revendication 5, dans lequel le dispositif de commande de trajet de signaux (36) est conçu pour vérifier quel module radio est commuté sur un trajet d'émission et transmettre le signal de commande par l'intermédiaire du câble d'antenne du module radio qui est commuté sur le trajet d'émission.

9. Véhicule à moteur (10) avec un dispositif d'antenne (12) selon l'une quelconque des revendications précédentes.
